Europäisches Patentamt

European Patent Office

Office européen des brevets

(11) Veröffentlichungsnummer : **0 069 059**
**B1**

# (12) EUROPÄISCHE PATENTSCHRIFT

(45) Veröffentlichungstag der Patentschrift :
30.07.86

(51) Int. Cl.⁴ : **A 01 D 84/00**

(21) Anmeldenummer : **82810247.5**

(22) Anmeldetag : **10.06.82**

(54) **Fahrbares Gerät mit Schnittgutaufnahme-Vorrichtung zur Behandlung von geschnittenem Pflanzengut.**

(30) Priorität : **19.06.81 DE 3124187**

(43) Veröffentlichungstag der Anmeldung :
**05.01.83 Patentblatt 83/01**

(45) Bekanntmachung des Hinweises auf die Patenterteilung : **30.07.86 Patentblatt 86/31**

(84) Benannte Vertragsstaaten :
**BE CH FR GB IT LI NL**

(56) Entgegenhaltungen :
**DE-A- 2 413 076**
**DE-A- 2 413 115**
**DE-C- 821 440**
**US-A- 2 679 720**
**US-A- 3 702 052**
**US-A- 3 884 022**

(73) Patentinhaber : **Müller, Paul E. Dipl.-Ing.**
**Herdernstrasse 16**
**CH-8004 Zürich (CH)**

(72) Erfinder : **Müller, Paul E. Dipl.-Ing.**
**Herdernstrasse 16**
**CH-8004 Zürich (CH)**

(74) Vertreter : **Feldmann, Clarence Paul et al**
**c/o Patentanwaltsbüro FELDMANN AG Postfach**
**Kanalstrasse 17**
**CH-8152 Glattbrugg (CH)**

**Beschreibung**

Die Erfindung betrifft ein fahrbares Gerät mit Schnittgut aufnahmevorrichtung zum Wenden und Trocknen von geschnittenem schwadenförmig geordnetem Pflanzengut auf dem Felde, mit einer Schnittgutaufnahme-Vorrichtung und einer daran anschliessenden in Fahrtrichtung rumindest teilweise schraubenlinienförmig, räumlich gebogenen, mit mindestens einem Förderorgan zusammenwirkenden Leitfläche, die bezüglich der Fahrtrichtung nach hinten gegen die Ablagerichtung ansteigt. Das Problem des Heuwendens ist so alt wie das Schneiden und Trocknen der Pflanzen. Es ist bekannt, dass halb getrocknetes Heu auf dem Feld durch Schlechtwetter viel an Nährsubstanz verliert. Nicht zuletzt wegen der Bemühungen, das Wetterrisiko in Grenzen zu halten, hat sich die Silage von Gras und Mais entwickelt. Auch das Nachtrocknen mit Warm- oder Kaltluft unter Dach findet seine Begründung im verminderten Wetterrisiko, da bei diesem System das Futter früher eingebracht werden kann.

Um den Trocknungsprozess weiter zu beschleunigen, wurden Mäh-Knick-Zetter entwickelt, die das gemähte Futter so aufbereiten, dass die Wasserabgabe an die Luft schneller erfolgt.

Bei diesen Maschinen wird das Futter vorzugsweise in Schwaden abgelegt, die an der Oberfläche durch Sonnen- und Lufteinwirkung trocknen. Das unten am Boden liegende Futter bleibt über längere Zeit grün und nass.

In der Landwirtschaft sind bereits viele Vorrichtungen bekannt um das Pflanzengut vom Boden des Feldes aufzunehmen. Es handelt sich hier vor allem um die den Pressen, Häckslern und Ladewagen vorgeschalteten Pick-up Einheiten.

Das Umdrehen der Schwaden erfolgt heute mit gewöhnlichen Rechen, die den Nachteil haben, Erde in das Futter einzuarbeiten, und die Schwad wie eine Kordel zu drehen, so dass die Nachfolgegeräte mit der Aufnahme und der Verarbeitung des Futters Schwierigkeiten haben.

Aus der DE-C 821 440 ist jedoch ein fahrbares Gerät der eingangs beschriebenen Art bekannt.

Das flächig auf dem Feld verteilte Pflanzengut wird mittels einem rechenartigen Zahnbalken aufgenommen, passiv auf der Leitfläche hochgeschoben und mittels eines Förderorgans seitlich abgeworfen. Zur flächenmässigen Begrenzung, dass heisst zum Trennen des aufzunehmenden vom auf dem Feld verbleibenden Pflanzengut, ist die Leitfläche mit seitlichen Kanten versehen. Zur weiteren Lockerung sind in der Leitfläche Blechstege angebracht.

Es ist die Aufgabe der vorliegenden Erfindung, ein Gerät zu schaffen, mit dem Schwaden von geschnittenem Pflanzengut schonend aufgenommen, gewendet und mit möglichst geringem Blattverlust versetzt werden können, so dass ein Ausbreiten der oben angetrockneten Schwaden mit einem Zetter sich erübrigt.

Diese Aufgabe löst ein Gerät gemäss Oberbegriff des Patentanspruches das sich dadurch auszeichnet, dass das Gerät eine mechanisch getriebene Schnittgutaufnahme-Vorrichtung hat, die das Schnittgut auf die mit Leitelementen versehene Leitfläche fördert, auf der es durch das mechanisch getriebene mit der Leitfläche zusammenwirkende Förderorgan weiter hinauf gefördert wird und dass eine an der Ablageseite der Leit- und Wendefläche angeordnete Abrutschsicherung vorgesehen ist.

Dieses Gerät hat den grossen Vorteil, dass das Pflanzengut schonend behandelt wird. Der Blattverlust wird auf ein Minimum beschränkt. Weiter wird das Futter schonend aufgenommen, umgedreht, und zum Beispiel seitlich abgelegt, so dass das oben angetrocknete Halmgut auf den trockenen Boden zu liegen kommt, während das grüne, nasse Gras sich auf der Oberseite der Schwad befindet. Auf diese Art wird der Trocknungsprozess stark beschleunigt und das Wetterrisiko herabgesetzt. Am hinteren Ende des gerätes kann als Kombination ein Gerät zur Lüftung der Schwaden eingebaut werden.

Für grössere Betriebe ist es wünschbar, am hinteren Ende des Gerätes ein etwa quer zur Fahrtrichtung angebautes Förderelement einzubauen, so dass das dadurch stark seitlich versetzt abgelegte Futter mit der daneben liegenden Schwad eine so genannte Doppelschwad bildet, die besonders für grosse Feldhäcksler oder Pressen geeignet ist. Das Gerät wird vorzugsweise an einem Schlepper angebaut. Der Anbau kann vorn, seitlich oder hinten am Schlepper erfolgen.

Weitere vorteilhafte Ausgestaltungsformen gehen aus den abhängigen Ansprüchen hervor.

In der Zeichnung sind Ausführungsbeispiele des Erfindungsgegenstandes vereinfacht dargestellt und anhand der nachfolgenden Beschreibung erläutert.

Es zeigt :

Figur 1 eine Seitenansicht des Gerätes zur Behandlung von geschnittenem, schwadenförmig geordnetem Pflanzengut,

Figur 2 eine Ansicht des Gerätes von vorne mit seitlichen Schwadenlüfter ;

Figur 2a einen Schnitt entlang der Linie A-A in Figur 2

Figur 3 eine schematische Darstellung des Gerätes zur Erläuterung der Arbeitsweise und

Figur 4 eine Ansicht von oben des Gerätes mit seitlich angeordnetem Schwadenversetzer.

Das erfindungsgemässe Gerät erlaubt, geschnittenes, schwadenförmig geordnetes, bereits von oben angetrocknetes Pflanzengut zum weiteren Trocknen aufzunehmen und um cirka 180 °C zu wenden. Das Aufnehmen des schwadenförmig geordneten Pflanzengutes vom Boden des Feldes erfolgt mit einer Schnittgutaufnahmevorrichtung 1. Schnittgutaufnahmevorrichtungen verschiedener Bauart sind von Mähdreschern, Pressen und Ladewagen her bekannt. Prinzipiell kann es wie im dargestellten Fall eine aktiv wirkende, mit einem getriebenen, walzenförmigen Rechen arbeitende Vorrichtung sein, oder ein passiver Rechen, bei dem das nachfolgende Pflanzengut das auf dem Rechen befindliche weiter stösst.

Das mit der Schnittgutaufnahmevorrichtung 1 vom Boden aufgenommene Pflanzengut wird anschliessend auf einer Leitfläche 2 abgelegt. Die Leitfläche 2 ist derart räumlich geformt, dass das auf der Leitfläche hinaufgleitende Pflanzengut sich überschlägt und seitlich von der Leitfläche hinabgleitet. Um diese Funktion zu erfüllen, muss die Leitfläche zum mindesten annähernd, mindestens einen Teilumgang einer Schraubenlinie darstellen. Die Leitfläche kann aber auch so ausgebildet sein, dass das aufgenommene Gut gedreht und in Fahrtrichtung hinten ungefähr in Verlängerung der Mittelachse des Gerätes abgelegt wird.

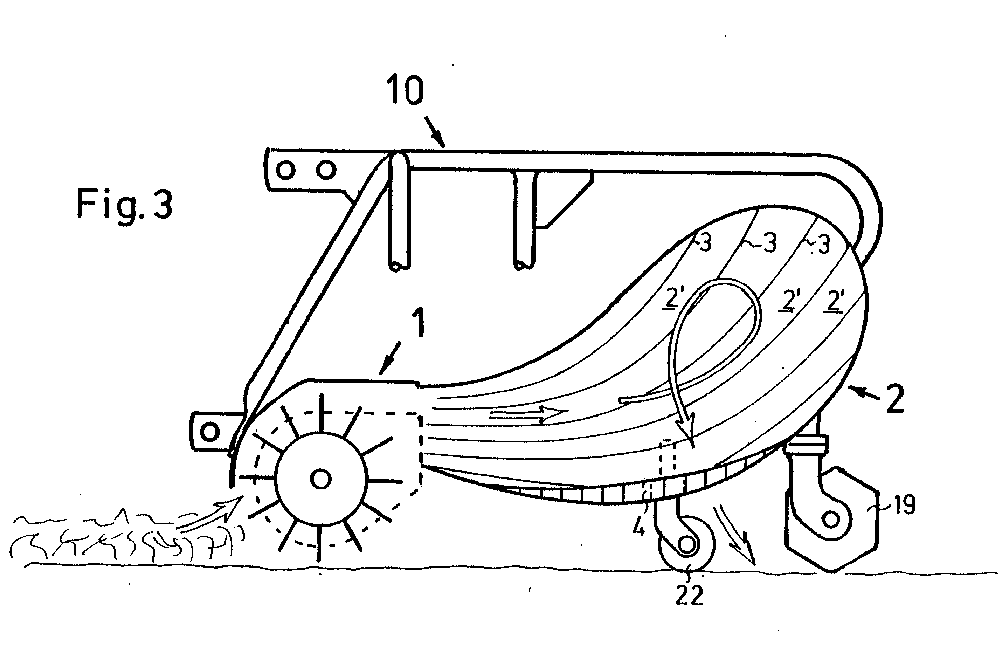

Je nach der Art und der Trockenheit des Pflanzengutes gleitet dieses auf der Leitfläche 2 mehr oder weniger gut. Um einerseits diese Reibung zu vermindern und andererseits die Bewegungsrichtung des Pflanzengutes auf der Leitfläche 2 zu beeinflussen, sind Leitelemente 3 vorgesehen. Je nach Ausführung der Leitfläche 2 lassen sich die Leitelemente 3 verschieden ausführen. Ist die Leitfläche beispielsweise aus einem Metallblech geformt, so lassen sich die Leitelemente in Form von rippenförmigen Erhebungen in das Blech drücken, wie in Figur 3 angedeutet. Es ist aber auch möglich, auf die Leitfläche entsprechend geformte Leitelemente in Form von Schienen oder Bügeln anzubringen. Ist die Leitfläche 2 selber als Rost aus Metallstäben gebildet, so stellen diese Stäbe auch gleichzeitig die Leitelemente 3 dar. Die Leitfläche 2 kann auch aus mehreren streifenförmigen Teilflächen 2' geformt sein, die miteinander verbunden sind.

Sind die Teilflächen entsprechend geformt und deren Kanten nach oben gebogen, so bilden diese Kanten die Leitelemente 3. Erwähnt sei schliesslich auch noch die Möglichkeit, die Leitfläche ganz oder teilweise aus Kunststoff zu fertigen.

Als weiteres passives, die Führung des Pflanzengutes beeinflussendes Element ist mindestens einseitig eine annähernd vertikal zur Leitfläche 2 verlaufende und an diese befestigte Abrutschsicherung 4 vorgesehen. Die Abrutschsicherung 4 verhindert das seitliche Abrutschen des Pflanzengutes, bevor es den kritischen Punkt, an dem der Vorgang des Wendens eindeutig eingeleitet ist, erreicht hat. Erst wenn das Pflanzengut durch die Form der Leitfläche 2 den erforderlichen Drall erhalten hat, soll es unter Einfluss der Schwerkraft seitlich abkippen können. Je nach Pflanzengut und dessen Trockenheit ist eine seitliche Führung mehr oder weniger erforderlich. Folglich muss die Abrutschsicherung 4 längen- und höhenverstellbar sein. Im wesentlichen ist sie aber lediglich im tiefstliegenden Bereich erforderlich.

Die vorgenannten passiven Leitelemente haben insbesondere Einfluss auf das Fliessverhalten von relativ schwerem Pflanzengut, beziehungsweise solches mit relativ hoher Dichte.

Für leichtes Pflanzengut, gut ausgetrocknetes Heu zum Beispiel, ist es jedoch innvoll, über der Leitfläche eine diese mindestens teilweise überdeckende Führungsfläche 5 anzuordnen. Die Führungsfläche 5 kann genau so vielgestaltig wie die Leitfläche 2 sein, und diese teilweise oder ganz überdecken. Die Führungsfläche 5 verhindert den Flug von leichtem Pflanzengut und bewirkt eine gewisse Kompression desselben, sodass die Leitelemente 3 besser auf das Pflanzengut einwirken und der erwünschte Drall auch zustande kommt.

Die Führungsfläche 5 kann auch wieder offen oder geschlossen, das heisst aus Stäben oder Leisten oder aus Blech- oder aus Kunststoffplatten hergestellt sein. Vielfach wird eine Führungsfläche 5' in Form eines Bleches das direkt anschliessend an der Schnittgutaufnahmevorrichtung 1 anschliesst und quer zur Fahrtrichtung des Gerätes verläuft genügen.

Obwohl der konstruktive Gesamtbau des Gerätes nicht erfindungswesentlich ist, sei auch dieser kurz beschrieben.

Die beiden Hauptteile, Schnittgutaufnahmevorrichtung 1 und Leitfläche 2, sind durch eine Rahmenkonstruktion 10 miteinander verbunden. Hierbei kann entweder eine Art Chassis vorgesehen sein, oder die Leitfläche kann eine selbsttragende Konstruktion sein, die lediglich mit der Aufnahmevorrichtung 1 verbunden ist.

In den dargestellten Ausführungsformen sind die Vorderräder 11 im Bereich der Schnittgutaufnahmevorrichtung angeordnet, die Leitfläche als selbsttragende Konstruktion ausgeführt und die Hinterräder beziehungsweise das Hinterrad 12 mit der Leitfläche verbunden. Ferner sind in den gezeigten Beispielen je ein Quer- 13 und ein Längsbügel 14 angebracht. Selbstverständlich kann diese Rahmenkonstruktion 10 auch umfangreicher sein. Nebst einer tragenden und stützenden Funktion des Gerätes als Fahrzeug dient die Rahmenkonstruktion 10 aber auch der Befestigung der Führungsfläche 5 und weiteren, noch zu beschreibenden aktiven, angetriebenen Förderorganen.

Damit das Pflanzengut auf der gegen hinten und an einer Seite ansteigenden, zur anderen Seite abfallenden Leitfläche auch wirklich den erwünschten Drall erhält, kann es je nach Pflanzengut sinnvoll sein, aktive Förderorgane 6 und/oder 9, 9' vorzusehen. Diese Förderorgane 6, 9 sind getriebene Elemente, die in den Strom des Pflanzengutes eingreifen. Verschiedene solcher Förderorgane 6, 9 sind bereits von diversen Landmaschinen her bekannt. Bezüglich der Rotationsachse lassen sich solche Förderorgane 6, 9 prinzipiell oberhalb oder unterhalb der Leitfläche 2 anordnen. Verläuft die Rotationsachse unterhalb der Leitfläche 2 muss das Förderorgan 6, 9 die Leitfläche mindestens teilweise durchsetzen.

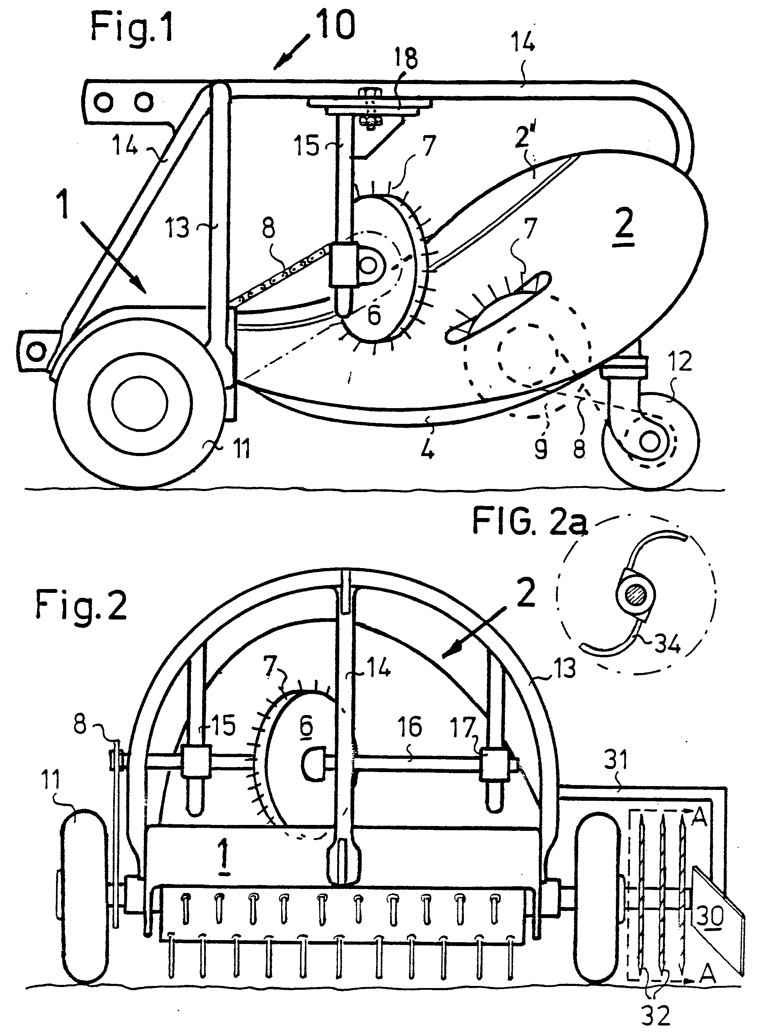

In Figur 1 sind beide Varianten dargestellt. In beiden Fällen handelt es sich um eine kreisrunde Scheibe, die zur Förderung mit Zinken oder Zacken 7 versehen ist. In Figur 1 ist das über der Leitfläche 2 befindliche Förderorgan 6 auf einer Achse gelagert, die von zwei Trägern 15 gehalten ist. Dagegen ist in Figur 2 dasselbe Organ 6 auf einer Welle 16 verschiebbar gelagert. Die Welle 16 selber ist durch verstellbare Lager 17 relativ zur Leitfläche 2 höhenverstellbar. In beiden Fällen können die Träger 15 auf dem Längsbügel 14 in etwa horizontal verschoben werden und mit den Arretierungsorganen 18 fixiert werden.

Neben den in der Zeichnung dargestellten Ausführungsformen der Förderorgane 6 seien noch einige Formen rein beispielsweise erwähnt. So kann als Förderorgan 6 auch eine Art konischer Trommel mit Zinken oder Zacken 7 verwendet werden, wobei die Trommel an einer vertikalen Achse oder Welle befestigt sein kann, die wiederum mit der Rahmenkonstruktion 10 verbunden ist. Auch Förderschnecken 9' sind als Förderorgane naheliegend. Je nach der Bauform des Gerätes und der zu unterstützenden Bewegung des Pflanzengutes kann eine Förderschnecke oder können mehrere Förderschnecken angebracht werden, die entweder in Fahrtrichtung oder quer dazu fördern.

Auch der Antrieb der Förderorgane 6, 9, 9' kann wiederum vielfältig gelöst sein. Der Antrieb kann beispielsweise über eine Zapfwelle eines Traktors, der das Gerät zieht, erfolgen.

Die Förderorgane 6, 9, 9' lassen sich aber auch durch die Räder 11, 12 treiben, wobei sich dann die Organe entsprechend der Abrollgeschwindigkeit der Räder am Boden bewegen. Bei einem Antrieb über eine Zapfwelle sind entsprechende Getriebe zwischengeschaltet, die die Rotationsgeschwindigkeit und die Drehrichtung der einzelnen Organe beeinflussen. Erfolgt jedoch der Antrieb über die Räder, können anstelle der Getriebe auch Transmissionen 8 treten, in Form von Ketten oder Riemen.

Um die Leitung beziehungsweise Führung des Pflanzenstromes nochmals zu verbessern, kann man sowohl die Leitfläche 2 und/oder die Führungsfläche 5 mittels Schwingungserreger rütteln. Zum Antrieb dieser Schwingungserreger können die vorgenannten Antriebsarten benützt werden. Zur Erzeugung der Schwingung kann ein angetriebener Exzenter verwendet werden. Andere Schwingungserreger lassen sich auch an oder einbauen. So kann man auch ein höhenverstellbares Stützrad mittel- oder unmittelbar an der Leitfläche 2 befestigen, welches über den Boden des Feldes rollt und die Bodenunebenheiten auf die Leitfläche überträgt. Die so übertragene, aperiodische Bewegung kann noch verstärkt werden, indem das Stützrad 19 exzentrisch oder vieleckig ausgebildet ist.

Haben die bisher beschriebenen, zusätzlichen Mittel im wesentlichen mit dem Strom des Pflanzengutes auf der Leitfläche 2 zu tun, so seien nun noch einige Mittel beschrieben, die den Strom des Pflanzengutes nach dem Verlassen der Leitfläche betreffen.

Aufgabe des Gerätes ist es ja, in Schwadenform vorliegendes Pflanzengut um cirka 180° zu drehen und wieder in Schwadenform abzulegen.

Erfolgt die Ablage des Pflanzengutes nicht in der gewünschten geraden Schwadenform, so kann dem mittels eines Schwadenformers 30 begegnet werden. Der Schwadenformer 30 besteht im wesentlichen aus einem annähernd senkrecht zur Bodenfläche verlaufenden Element, das die Schwadablage einseitig zum Gerät hin begrenzt. Der Schwadformer 30 ist höhen- und winkelverstellbar an einem teleskopischen, am Gerät befestigten Arm 31 montiert. Grundsätzlich können natürlich die Schwaden auch beidseitig zusammengehalten werden, wozu lediglich ein zweites Schwadenformerblech erforderlich wäre.

Sinn der Erfindung ist es, die Trocknungszeit des Pflanzengutes bei Trocknung auf dem Felde zu verkürzen.

Dieses Ziel wird sicherlich noch besser erreicht, wenn die Schwaden mittels eines Schwadenlüfters zusätzlich gelockert werden. Ein solcher Schwadenlüfter 32 kann einfach eine senkrechts zur Fahrtrichtung auf der Seite der Schwadenabgabe, seitlich am Gerät vorstehende Welle mit Zinken sein. Schwadenlüfter und Schwadenformer lassen sich auch vorteilhaft zu einer Baueinheit kombinieren.

In einer möglichen Ausführungsform arbeitet der Schwadenlüfter nach folgendem, im Schnitt A-A dargestellten Prinzip : Die Zinken 34 drehen sich im Gegenuhrzeigersinn. Ihre Umfangsgeschwindigkeit ist geringer als die Vorwärtsgeschwindigkeit des Gerätes, so dass durch die Vorwärtsbewegung des Gerätes die Zinken das Pflanzengut aufgreifen und aufgelockert fallen lassen.

Bei seitlicher Abgabe des Pflanzengutes von der Leitfläche 2 kommt dieses mit ziemlicher Sicherheit nicht auf die gleiche Bodenfläche zu liegen. Dies ist in Anbetracht dessen, dass die Bodenfläche an der Stelle an der die Schwaden gelegen haben, meist noch feucht, daneben aber trocken ist, von besonderer Bedeutung. Bei einer breiten Schwad oder bei etwas seitlicher Zufuhr in die Aufnahmevorrichtung 1 ist eine gewisse Ueberlappung der alten und neuen Ablagefläche des Pflanzengutes nicht ausgeschlossen. Vermieden werden kann dies jedoch, wenn man einen ebenfalls auf der Seite der Pflanzengutablage, einen Schwadenversetzer 33 vorsieht.

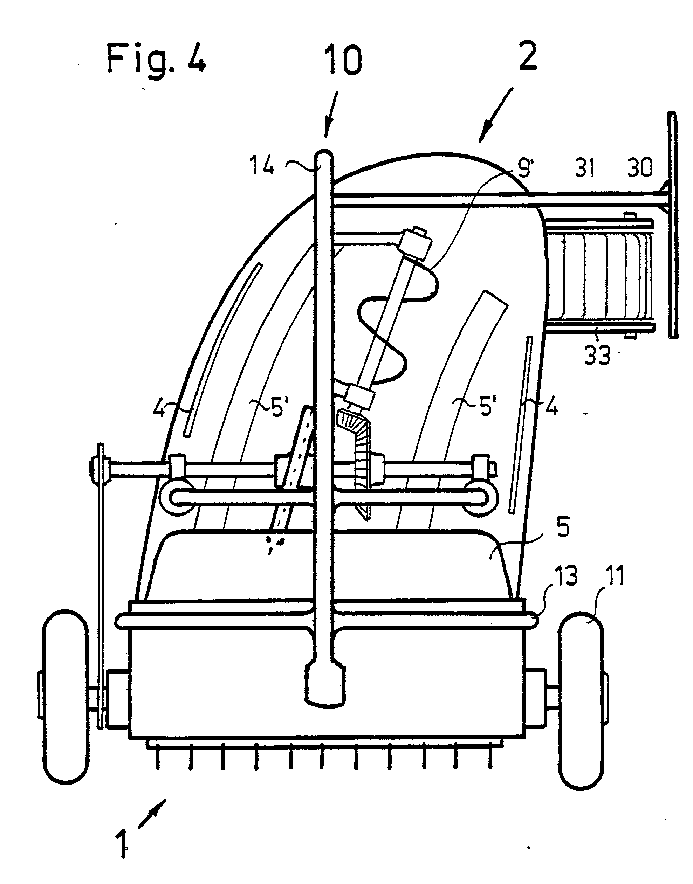

Der Schwadenversetzer kann eine über eine Rolle laufende breite Kette mit daran befestigten Zinken sein, wie dies in Figur 4 dargestellt ist. Der Schwadenversetzer 33 ist jedoch noch in zwei weiteren Hinsichten dienlich.

Zum einen hat er gleichzeitig die Wirkung eines Schwadenlüfters, zum zweiten kann man hiermit jeweils zwei benachbarte Schwaden zu einer Doppelschwad zusammen schieben, so dass man schliesslich mit einem Nachfolgegerät zwei Schwaden gleichzeitig aufladen respektive häckseln oder pressen kann.

**Patentansprüche**

1. Fahrbares Gerät zum Wenden und Trocknen von geschnittenem, schwadenförmig geordnetem Pflanzengut auf dem Felde, mit einer Schnittgutaufnahme-Vorrichtung (1), und einer daran anschliessenden in Fahrtrichtung zumindest teilweise schraubenlinienförmig, räumlich gebogenen, mit mindestens einem Förderorgan (6, 9) zusammenwirkenden Leitfläche (2), die bezüglich der Fahrtrichtung nach hinten gegen die Ablage-Richtung ansteigt, dadurch gekennzeichnet, dass das Gerät eine mechanisch getriebene Schnittgutaufnahme-Vorrichtung (1) hat, die das Schnittgut auf die mit Leitelementen (3) versehene Leitfläche (2) fördert, auf der es durch das mechanisch getriebene mit der Leitfläche zusammenwirkende Förderorgan (6, 9) weiter hinauf gefördert wird, und dass eine an der Ablageseite der Leit- und Wendefläche (2) angeordnete Abrutschsicherung (4) vorgesehen ist.

2. Gerät nach Anspruch 1, dadurch gekennzeichnet, dass die Abrutschsicherung (4) relativ zur Leitfläche höhen- und längsverstellbar ist.

3. Gerät nach Anspruch 1, dadurch gekennzeichnet, dass die an oder auf der Leitfläche (2) angeordneten Leitelemente (3) Rippen sind.

4. Gerät nach Anspruch 1, dadurch gekennzeichnet, dass die Leitfläche mindestens teilweise von mehreren Führungsflächen (5') in Form von Stäben oder Leisten überdeckt ist, die miteinander verbunden und verstellbar sind.

5. Gerät nach Anspruch 1, dadurch gekennzeichnet, dass mindestens ein rotierendes, das Schnittgut schiebendes, über der Leitfläche angeordnetes Förderorgan (6, 9, 9') vorgesehen ist.

6. Gerät nach Anspruch 5, dadurch gekennzeichnet, dass das Förderorgan (6) sowohl auf einer Welle (16) seitlich verschiebbar als auf einer Halterung (15) höhenverstellbar angeordnet ist.

7. Gerät nach Anspruch 5, dadurch gekennzeichnet, dass ein auf einer oberhalb der Leitfläche verlaufenden mechanisch getriebenen Welle (16) angeordnetes, trommelförmiges rotierendes Förderorgan vorgesehen ist.

8. Gerät nach Anspruch 5, dadurch gekennzeichnet, dass mindestens ein Förderorgan mit annähernd quer zur Fahrtrichtung verlaufender, unterhalb der Leitfläche angeordneten Welle vorgesehen ist, wobei das Förderorgan (9) teilweise durch die Leitfläche (2) hindurch ragt.

9. Gerät nach Anspruch 5 und 6, dadurch gekennzeichnet, dass die Förderorgane (6, 9) entlang ihrer Peripherie mit Zinken oder Zacken (7) versehen sind.

10. Gerät nach Anspruch 5, dadurch gekennzeichnet, dass mindestens eine annähernd in Fahrtrichtung angeordnete Förderschnecke (9') vorgesehen ist.

11. Gerät nach Anspruch 5, dadurch gekennzeichnet, dass das Förderorgan über einen die Rotationsgeschwindigkeit und die Drehrichtung beeinflussenden Antrieb getrieben wird.

12. Gerät nach Anspruch 1, dadurch gekennzeichnet, dass die Leitfläche (2) mit einem Schwingungserreger in Wirkverbindung steht.

13. Gerät nach Anspruch 12, dadurch gekennzeichnet, dass der Schwingungserreger ein getriebener Exzenter ist.

14. Gerät nach Anspruch 12, dadurch gekennzeichnet, dass der Schwingungserreger ein unrundes Stützrad (19) ist.

15. Gerät nach Anspruch 12, dadurch gekennzeichnet, dass der Schwingungserreger ein Abtastrad (22) ist, welches die Unebenheiten des Bodens des Feldes auf die Leitfläche (2) überträgt.

16. Gerät nach Anspruch 1, dadurch gekennzeichnet, dass seitlich, an dem in Fahrtrichtung rückwärtigen Ende ein getriebener Schwadenversetzer (33) angeordnet ist, der das von der Leitfläche gleitende Pflanzengut quer zur Fahrtrichtung versetzt.

17. Gerät nach den Ansprüchen 5 und 12, dadurch gekennzeichnet, dass der Antrieb der bewegenden Elemente über ein oder mehrere Räder (11, 12) des Gerätes erfolgt.

18. Gerät nach den Ansprüchen 5 und 12 dadurch gekennzeichnet, dass der Antrieb der bewegenden Elemente über eine Zapfwelle einer das Gerät ziehenden Zugmaschine erfolgt.

19. Gerät nach Anspruch 1, dadurch gekennzeichnet, dass die Leitfläche (2) aus einer Kunststoffplatte gefertigt ist.

20. Gerät nach Anspruch 1, dadurch gekennzeichnet, dass die Leitfläche (2) aus mehreren geformten Metallstäben gebildet ist.

21. Gerät nach Anspruch 1, dadurch gekennzeichnet, dass seitlich in Fahrtrichtung am rückwärtigen Ende des Gerätes ein Schwadenformer (30) in Form eines annähernd vertikal verlaufenden Elementes angelenkt ist.

22. Gerät nach Anspruch 21, dadurch gekennzeichnet, dass der Schwadenformer (30) in seiner relativen Distanz und Neigung zur Leitfläche (2) verstellbar ist.

23. Gerät nach Anspruch 1, dadurch gekennzeichnet, dass seitlich in Fahrtrichtung am rückwärtigen Ende des Gerätes ein Schwadenlüfter (32) vorgesehen ist, der aus einer etwa quer zur Fahrtrichtung verlaufenden, getriebenen Welle mit Zinken besteht.

**Claims**

1. A mobile appliance for turning and drying cut plant material arranged in swaths on the field, having an apparatus (9) for receiving the material to be cut, and a spatially curved guide surface (2), which adjoins the receiving apparatus (9), is at least partially helical in the direction of travel, cooperates with at least one conveying means (6, 9) and rises towards the rear relative to the direction of travel towards the direction of deposition, characterized in that the appliance comprises a mechanically driven apparatus (1) for receiving the material to be cut, which conveys the material to be cut to the guide surface (2) which is provided with guide elements (3) and on which the material to be cut is passed on upwards by the mechanically driven conveying means (6, 9) cooperating with the guide surface, and a means (4) for preventing slippage is provided disposed on the deposition side of the guiding and turning surface (2).

2. An appliance according to Claim 1, characterized in that the means (4) for preventing slippage is vertically and longitudinally adjustable relative to the guide surface.

3. An appliance according to Claim 1, characterized in that the guide elements (3) disposed on the guide surface (2) are ribs.

4. An appliance according to Claim 1, characterized in that the guide surface is covered at least in part by a plurality of guiding surfaces (5') in the form of rods or strips which are joined to one another and are adjustable.

5. An appliance according to Claim 1, characterized in that at least one rotating conveying means (6, 9, 9') is provided which displaces the material to be cut and is disposed above the guide surface.

6. An appliance according to Claim 5, characterized in that the conveying means (6) is arranged both laterally displaceably on a shaft (16) and vertically displaceably on a holding means (15).

7. An appliance according to Claim 5, characterized in that a rotating drum-shaped conveying means is provided, which is mounted on a mechanically driven shaft (16) extending above the guide surface.

8. An appliance according to Claim 5, characterized in that at least one conveying means with a shaft, which is disposed below the guide surface and which extends approximately transversely to the direction of travel, is provided, the conveying means (9) extending partially through the guide surface (2).

9. An appliance according to Claims 5 and 6, characterized in that the conveying means (6, 9) are provided along their periphery with prongs or teeth (7).

10. An appliance according to Claim 5, characterized in that at least one conveying worm (9') arranged approximately in the direction of travel is provided.

11. An appliance according to Claim 5, characterized in that the conveying means is driven by way of a drive which controls the rotational speed and the direction of rotation.

12. An appliance according to Claim 1, characterized in that the guide surface (2) is operatively connected to a vibration generator.

13. An appliance according to Claim 12, characterized in that the vibration generator is a driven eccentric.

14. An appliance according to Claim 12, characterized in that the vibration generator is a non-circular jack wheel (19).

15. An appliance according to Claim 12, characterized in that the vibration generator is a sensing wheel (22) which transmits the irregularities of the surface of the field to the guide surface (2).

16. An appliance according to Claim 1, characterized in that a driven swath displacement means (33), which displaces transversely to the direction of travel the plant material sliding off the guide surface, is provided laterally at the end towards the rear in the direction of travel.

17. An appliance according to Claims 5 and 12, characterized in that the moving parts are driven by way of one or more wheels (11, 12) of the appliance.

18. An appliance according to Claims 5 and 12, characterized in that the moving parts are driven by way of a power take-off shaft of a tractor which pulls the appliance.

19. An appliance according to Claim 1, characterized in that the guide surface (2) is produced from a sheet of plastics material.

20. An appliance according to Claim 1, characterized in that the guide surface (2) is formed by a plurality of shaped metal rods.

21. An appliance according to Claim 1, characterized in that a swath shaper (30) in the form of an element extending approximately vertically is articulated laterally at the end of the appliance towards the rear in the direction of travel.

22. An appliance according to Claim 21, characterized in that the swath shaper (30) is variable in its relative distance and inclination to the guide surface (2).

23. An appliance according to Claim 1, characterized in that a swath airing means (32), which comprises a driven shaft extending approximately transversely to the direction of travel and provided with prongs, is provided laterally at the end of the appliance towards the rear in the direction of travel.

**Revendications**

1. Appareil mobile pour le retournement et le séchage de végétaux coupés, déposés sur le sol sous la forme d'un andain, pourvu d'un dispositif de prélèvement des végétaux coupés (1) auquel est rattaché un dispositif de guidage (2) coopérant avec un organe d'entraînement (6, 9), lequel dispositif est courbé au moins partiellement en forme d'hélice dans le sens d'avancement et s'élève vers l'arrière vu dans le sens d'avancement à l'opposé de la direction de dépose, caractérisé par le fait que cet appareil comporte un dispositif de prélèvement des végétaux coupés entraîné mécaniquement, qui achemine les végétaux vers le dispositif de guidage pourvu d'éléments de guidage (3), sur lequel ils sont acheminés vers le haut grâce à l'organe d'entraînement (6, 9) entraîné mécaniquement qui coopère avec le dispositif de guidage, et qu'un organe de retenue (4) est prévu sur le côté du dépôt du dispositif de guidage et de retournement (2).

2. Appareil selon la revendication 1, caractérisé par le fait que l'organe de retenue (4) est ajustable en hauteur et dans le sens de la longueur par rapport au dispositif de guidage.

3. Appareil selon la revendication 1, caractérisé par le fait que les éléments de guidage (3) fixés au ou sur le dispositif de guidage (2) sont des nervures.

4. Appareil selon la revendication 1, caractérisé par le fait que le dispositif de guidage est recouvert au moins partiellement de plusieurs surfaces de conduite (5') en forme de barres ou de tringles qui sont reliées entre elles et sont ajustables.

5. Appareil selon la revendication 1, caractérisé par le fait qu'au moins un organe d'entraînement rotatif (6, 9, 9'), pour déplacer les végétaux, est prévu au-dessus du dispositif de guidage.

6. Appareil selon la revendication 5, caractérisé par le fait que l'organe d'entraînement (6) est à la fois déplaçable latéralement sur un arbre (16) et ajustable en hauteur sur un support (15).

7. Appareil selon la revendication 5, caractérisé par le fait qu'un organe d'entraînement rotatif, en forme de tambour, est prévu sur un arbre (16) entraîné mécaniquement qui se situe au-dessus du dispositif de guidage.

8. Appareil selon la revendication 5, caractérisé par le fait qu'il comporte au moins un organe d'entraînement avec un arbre disposé sensiblement transversalement par rapport au sens d'avancement et prévu sous le dispositif de guidage, ledit organe d'entraînement (9) passant partiellement à travers le dispositif de guidage.

9. Appareil selon les revendications 5 et 6, caractérisé par le fait que les organes d'entraînement (6, 9) sont pourvus de pointes ou de dents sur leur périphérie.

10. Appareil selon la revendication 5, caractérisé par le fait qu'il comporte au moins une vis de déplacement (9') disposée sensiblement dans le sens d'avancement.

11. Appareil selon la revendication 5, caractérisé par le fait que l'organe d'entraînement est animé au moyen d'une commande qui influence la vitesse et le sens de rotation.

12. Appareil selon la revendication 1, caractérisé par le fait que le dispositif de guidage (2) coopère avec un organe provoquant des vibrations.

13. Appareil selon la revendication 12, caractérisé par le fait que l'organe vibreur est un excentrique entraîné.

14. Appareil selon la revendication 12, caractérisé par le fait que l'organe vibreur est une roue d'appui non circulaire (19).

15. Appareil selon la revendication 12, caractérisé par le fait que l'organe vibreur est une roue palpeuse (22) qui transmet les dénivellations du sol au dispositif de guidage (2).

16. Appareil selon la revendication 1, caractérisé par le fait qu'un dispositif de déplacement d'andains entraîné (33) est fixé latéralement à l'extrémité arrière, vu dans le sens d'avancement, lequel dispositif déplace, transversalement au sens d'avancement, les végétaux provenant du dispositif de guidage.

17. Appareil selon la revendication 5 et 12, caractérisé par le fait que l'entraînement des éléments en mouvement se fait au moyen d'une ou de plusieurs roues (11, 12) de l'appareil.

18. Appareil selon les revendications 5 et 12, caractérisé par le fait que l'entraînement des éléments en mouvement se fait au moyen d'un arbre de prise de force d'un tracteur tirant l'appareil.

19. Appareil selon la revendication 1, caractérisé par le fait que le dispositif de guidage (2) est une plaque en matière synthétique.

20. Appareil selon la revendication 1, caractérisé par le fait que le dispositif de guidage (2) est constitué de plusieurs barres métalliques façonnées.

21. Appareil selon la revendication 1, caractérisé par le fait qu'un dispositif de formation d'andains (30) ayant la forme d'un élément disposé sensiblement verticalement, est accouplé latéralement à l'extrémité arrière, vu dans le sens d'avancement, de l'appareil.

22. Appareil selon la revendication 21, caractérisé par le fait que la distance et l'inclinaison du dispositif de formation d'andains (30) par rapport au dispositif de guidage (2) sont réglables.

23. Appareil selon la revendication 1, caractérisé par le fait qu'un aérateur d'andains (32) est prévu latéralement à l'extrémité arrière de l'appareil, vu dans le sens d'avancement, lequel aérateur est composé d'un arbre animé muni de dents, disposé sensiblement transversalement par rapport au sens d'avancement.

0 069 059

Fig.1

FIG. 2a

Fig.2

1

Fig. 3

0 069 059

# Fig. 4